# FASCICULE DE BREVET EUROPEEN

(11) **EP 1 819 978 B1**
(45) Date de publication et mention de la délivrance du brevet: **03.08.2016**
(21) Numéro de dépôt: 05819280.8
(22) Date de dépôt: 14.11.2005
(51) Int. Cl.: F27D 17/00, C03B 5/235, F23D 14/66, F28D 15/00, F23L 15/04

(54) **ECHANGEUR DE CHALEUR INDIRECT ET PROCEDE D'ECHANGE DE CHALEUR**
INDIREKTER WÄRMETAUSCHER UND VERFAHREN ZUM WÄRMETAUSCH
INDIRECT HEAT EXCHANGER AND METHOD FOR HEAT EXCHANGING

(30) Priorité: 22.11.2004 FR 0452714
(43) Date de publication de la demande: 22.08.2007
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: CONSTANTIN, Gabriel, F-78530 BUC (FR); TSIAVA, Rémi Pierre, F-91250 ST GERMAIN LES CORBEIL (FR); LEROUX, Bertrand, F-92130 ISSY LES MOULINEAUX (FR)
(74) Mandataire: De Vleeschauwer, Natalie Y.L.D.
(86) Numéro de dépôt international: PCT/FR2005/050943
(87) Numéro de publication internationale: WO 2006/054015

(56) Documents cités:
- EP-A- 0 889 297
- GB-A- 1 587 733
- US-A- 6 071 116

## Description

L'invention concerne toute industrie dans laquelle on utilise un four générant des fumées chaudes, four dans lequel on souhaite utiliser l'énergie thermique des fumées chaudes pour préchauffer des réactifs alimentant le four, et ainsi améliorer le rendement thermique du four. Il peut s'agir en particulier de l'industrie de verre, et notamment de l'industrie du verre plat.

On connaît essentiellement deux modes de chauffage de gaz à partir des fumées chaudes.

On connaît tout d'abord des dispositifs comprenant un échangeur de chaleur qui permet un chauffage direct, éventuellement à travers une paroi, du gaz de combustion par les fumées chaudes générées par le four. Les documents EP 950 031 et US 5,807,418 décrivent de tels dispositifs. Cette solution, bien que d'un coût raisonnable puisqu'elle ne comporte qu'un seul échangeur de chaleur, ne semble cependant pas apporter un niveau de sécurité fiable ou en tout cas suffisant. En effet, les fumées contiennent souvent des imbrûlés, soit parce que le procédé nécessite une atmosphère réductrice, soit à cause d'un mauvais fonctionnement du brûleur. Au cours du temps, le matériau de l'échangeur de chaleur peut être endommagé, notamment par corrosion, du fait du contact avec les fumées chaudes. Des parties de l'échangeur défectueuses peuvent alors permettre la rencontre du gaz de combustion, qui est par hypothèse de l'oxygène, chaud avec ces imbrûlés et ainsi générer une source d'incendie dont les conséquences seraient désastreuses.

Par ailleurs, on connaît également des dispositifs comprenant un échange de chaleur en deux étapes, grâce à deux échangeurs de chaleur distincts. Le premier échangeur de chaleur sert à chauffer un fluide intermédiaire, notamment de l'air, à partir des fumées chaudes et le deuxième échangeur de chaleur sert à chauffer le gaz de combustion, en particulier l'oxygène, à partir du fluide intermédiaire précédemment chauffé par le premier échangeur de chaleur. Les documents US 6,071,116 et US 6,250,916, brevets du titulaire de la présente demande de brevet, décrivent de tels dispositifs. Cette solution est plus sécurisante que la première décrite ci-dessus car la teneur en oxygène du fluide intermédiaire n'est pas suffisante pour enflammer les imbrûlés de fumées. Par ailleurs, une perforation dans les parois de l'échangeur gaz de combustion/fluide intermédiaire n'aura aucun effet lorsque ledit gaz est l'oxygène et le fluide intermédiaire est l'air car il s'agit de la rencontre de deux comburants. En revanche, cette solution n'est pas adaptée pour le chauffage du gaz naturel en tant que gaz de combustion car une défaillance de l'échangeur de chaleur fluide intermédiaire/gaz permettrait le mélange de gaz naturel avec l'air chaud (fluide intermédiaire) et générerait une explosion. Un autre désavantage de cette solution est son coût élevé, puisqu'elle nécessite deux échangeurs de chaleur distincts reliés par un circuit.

Il subsiste donc un besoin pour un dispositif à échange de chaleur amélioré, telle que décrit dans la revendication 11 et un procédé d'échange de chaleur, telle que décrit dans la revendication 1, permettant d'éviter les inconvénients des dispositifs connus.

L'invention a donc pour objet un échangeur de chaleur pour four à combustion, ledit échangeur comprenant une zone d'échange de chaleur pourvue d'un moyen de traversée de fumées chaudes issues d'un brûleur du four, ladite zone étant traversée par au moins un moyen pour transporter un gaz de combustion à chauffer depuis une source de gaz de combustion, via la zone d'échange de chaleur et jusqu'à un brûleur du four, ledit moyen étant pourvu d'une paroi conçue pour permettre le chauffage du gaz de combustion par transfert d'énergie thermique, ledit moyen pour transporter le gaz de combustion étant disposé dans la zone d'échange de chaleur dans un moyen susceptible de contenir un gaz inerte et pourvu d'une paroi conçue pour permettre le chauffage du gaz inerte par transfert de l'énergie thermique desdites fumées chaudes.

Dans un échangeur de chaleur selon l'invention, le transfert thermique ou échange de chaleur entre les fumées chaudes et le gaz de combustion se fait de façon indirecte : à travers une paroi (celle du moyen pour transporter un gaz de combustion) et à travers une atmosphère de gaz inerte.

Par gaz de combustion, on entend tout gaz habituellement utilisé dans un échangeur de chaleur, et en particulier un comburant tel que de l'oxygène, de l'air, de l'air enrichi en oxygène, ou un combustible, tel que du gaz naturel.

Par gaz inerte, on entend tout gaz inerte vis-à-vis de la combustion, c'est-à-dire tous les gaz non combustibles sauf l'oxygène. On citera notamment l'argon, l'hélium, le néon, le krypton, l'azote ou un de leurs mélanges. Ledit gaz inerte est de préférence statique. Dans un mode de réalisation, le gaz inerte est non statique, c'est-à-dire qu'il y a un flux de gaz inerte dans le moyen contenant le gaz inerte, mais cela implique un circuit d'alimentation séparé et donc un dispositif plus complexe.

Le moyen de traversée de fumées chaudes issues d'un brûleur du four peut être tout moyen habituellement connu et utilisé par un homme de l'art dans un échangeur de chaleur usuel, en particulier les fumées peuvent être canalisées à contre-courant du gaz de combustion ou perpendiculairement à la direction du gaz de combustion.

Le moyen pour transporter le gaz de combustion peut être tout moyen approprié connu de l'homme du métier et permettant le transport du gaz de combustion depuis une source de gaz de combustion, via la zone d'échange de chaleur de façon, et vers un brûleur du four à combustion. Il peut s'agir par exemple d'au moins un tube ou conduit; droit on non. La section droite dudit moyen peut être quelconque, régulière ou non, par exemple parfaitement ou sensiblement circulaire, ou ovale ou en ellipse ou rectangulaire ou rectangulaire à angles arrondis ou toute forme intermédiaire, et sera de préférence parfaitement ou sensiblement circulaire. Tout moyen pour transporter un gaz de combustion utilisé dans un échangeur de chaleur de l'art antérieur peut être utilisé.

La paroi du moyen pour transporter le gaz de combustion est principalement en un matériau approprié pour résister à une atmosphère de gaz de combustion chaud, et approprié pour permettre un échange de chaleur entre le gaz de combustion et le gaz inerte, qui a lui-même été chauffé par les fumées chaudes traversant la zone d'échange de chaleur. Le matériau principalement utilisé sera donc de préférence résistant à l'oxydation dans une atmosphère à oxygène chaud, lorsque le gaz de combustion est un comburant contenant de l'oxygène. Les matériaux susceptibles d'être utilisés développent de préférence dans l'oxygène chaud une couche protectrice d'oxyde métallique (phénomène de passivation). Les types de matériaux qui peuvent être utilisés sont notamment les alliages fer-nickel, et notamment l'alliage Fe-20Cr-30Ni. Pour certaines applications, il est souhaité que le matériau utilisé ne contienne pas de nickel, auquel cas on peut utiliser des matériaux tels que l'alliage Fe-21Cr-5Al, moins disponible et plus cher. D'une manière générale, la paroi n'étant pas en contact direct avec les fumées chaudes, les contraintes en terme de choix de matériau sont moindres que dans les échangeurs de chaleur de l'art antérieur, dans lesquels les contraintes sont liées non seulement au contact avec le gaz de combustion chaud mais également au contact avec les fumées chaudes.

A titre d'exemple, la température des fumées utile peut varier de 500°C à 1600°C, alors que la température des parois en contact avec les fumées chaudes peut varier de 300°C à 1300°C et celle des parois en contact avec le gaz de combustion à chauffer peut varier de 300°C à 1000°C ; la température du gaz inerte peut varier de 300°C à 1000°C et celle du gaz de combustion de 300°C à 1000°C.

Le moyen susceptible de contenir un gaz inerte peut être tout moyen approprié susceptible de contenir un gaz inerte, statique ou non, et dans lequel peut être disposé au moins un moyen pour transporter un gaz de combustion. Il peut s'agir par exemple d'au moins un tube ou conduit, droit on non. La section droite dudit moyen peut être quelconque, régulière ou non, par exemple parfaitement ou sensiblement circulaire, ou ovale ou en ellipse ou rectangulaire ou rectangulaire à angles arrondis ou toute forme intermédiaire. La section droite dudit moyen susceptible de contenir un gaz inerte sera supérieure en dimensions mais de préférence similaire ou identique en forme à la section droite du moyen pour transporter le gaz de combustion, en particulier lorsqu'un seul moyen pour transporter un gaz de combustion est disposé dans le moyen susceptible de contenir un gaz inerte.

L'homme de l'art comprendra que l'épaisseur, régulière ou non, de l'atmosphère de gaz inerte dans laquelle est disposé le moyen pour transporter un gaz de combustion, ne doit pas être trop importante, de sorte que le transfert d'énergie thermique puisse se produire depuis les fumées chaudes via le gaz inerte et jusqu'au gaz de combustion, et saura déterminer l'épaisseur maximum appropriée.

Le transfert thermique entre les fumées chaudes et le gaz de combustion via le gaz inerte est aussi fonction de la pression du gaz inerte, car à haute pression la masse volumique du gaz inerte augmente et donc le taux de transfert thermique augmente, l'échangeur de chaleur est donc a priori plus efficace.

Dans un premier mode de réalisation particulier, le moyen pour transporter le gaz de combustion et le moyen susceptible de contenir le gaz inerte sont des tubes droits de section droite parfaitement ou sensiblement circulaire. Il n'y a normalement pas de contact direct entre le gaz de combustion et la paroi du moyen susceptible de contenir le gaz inerte. Ladite paroi ne subit donc pas les mêmes contraintes que celle du moyen pour transporter le gaz de combustion, la probabilité de corrosion ou/et d'oxydation est beaucoup plus faible. La gamme des matériaux utilisables est donc plus large que celle des matériaux utilisables pour la paroi du moyen pour transporter un gaz de combustion.

Dans un deuxième mode de réalisation particulier, le moyen pour transporter le gaz de combustion et le moyen susceptible de contenir le gaz inerte sont des tubes droits de section droite parfaitement ou sensiblement circulaire et, en outre, ces tubes sont reliés entre eux par des ponts métalliques s'étendant de la paroi interne du tube extérieur à la paroi extérieure du tube intérieur. Ce deuxième mode de réalisation présente l'avantage de permettre un transfert thermique par radiation du fait de la conduction à travers ces ponts métalliques. Il présente aussi l'avantage de renforcer les propriétés mécaniques de l'échangeur.

Dans un mode de réalisation, le moyen pour transporter un gaz de combustion est disposé dans un moyen susceptible de contenir un gaz inerte uniquement dans la zone d'échange de chaleur. Dans un autre mode de réalisation, il est disposé dans un moyen susceptible de contenir un gaz inerte dans la zone d'échange de chaleur ainsi que dans une ou plusieurs zones précédant et/ou suivant cette zone d'échange de chaleur dans le sens de transport du gaz de combustion dans le moyen pour transporter le gaz de combustion, ledit sens de transport étant de l'entrée du gaz de combustion dans ledit moyen à la sortie du gaz de combustion dudit moyen.

Un échangeur de chaleur selon l'invention peut comprendre un unique moyen pour transporter un gaz de combustion, disposé dans un unique moyen susceptible de contenir un gaz inerte. Dans ce mode de réalisation, chaque ensemble moyen pour transporter un gaz de combustion / moyen susceptible de contenir un gaz inerte peut être inséré et enlevé individuellement en cas de détérioration.

Un échangeur de chaleur selon l'invention peut aussi comprendre plusieurs moyens pour transporter un gaz de combustion - par exemple une dizaine desdits moyens - chacun desdits moyens étant disposé dans un moyen susceptible de contenir un gaz inerte. Dans ce mode de réalisation, chaque ensemble moyen pour transporter un gaz de combustion / moyen susceptible de contenir un gaz inerte peut également être inséré et enlevé individuellement en cas de détérioration. Dans ce mode de réalisation, les moyens susceptibles de contenir un gaz inerte peuvent de manière optionnelle être reliés entre eux dans la zone d'échange de chaleur par des conduits appropriés, auquel cas il faudra en cas de détérioration changer tous les ensembles moyen pour transporter un gaz de combustion / moyen susceptible de contenir un gaz inerte.

Un échangeur de chaleur selon l'invention peut encore comprendre plusieurs moyens pour transporter un gaz de combustion disposés dans un unique moyen susceptible de contenir un gaz inerte. Dans ce mode de réalisation, l'ensemble moyens pour transporter un gaz de combustion / moyen susceptible de contenir un gaz inerte devra être inséré et enlevé en cas de détérioration.

De préférence, lorsqu'un échangeur de chaleur selon l'invention comprend plusieurs moyens pour transporter un gaz de combustion, on évitera de disposer dans le même échangeur de chaleur un moyen pour transporter un comburant et un moyen pour transporter un combustible, et on disposera plutôt dans le même échangeur de chaleur des moyens pour transporter un gaz de combustion de même type (comburant ou combustible).

La zone d'échange de chaleur de l'échangeur de chaleur selon l'invention est apte à être traversée par des fumées chaudes issues d'un brûleur du four. En pratique, les fumées chaudes sortent du brûleur et sont récupérées dans une tuyauterie, qui les amènent jusqu'à l'échangeur de chaleur de façon à ce qu'elles le traversent de la manière souhaitée. Le sens de traversée des fumées chaudes peut être quelconque, par exemple de bas ou en haut, ou à contre-courant par rapport au sens de transport du gaz de combustion, comme cela est connu de l'homme du métier.

L'échangeur de chaleur indirect selon l'invention présente plusieurs avantages du fait de la présence d'une zone de gaz inerte.

L'échangeur de chaleur indirect selon l'invention permet d'élargir la gamme des matériaux utilisables. En effet, lors du démarrage de l'échangeur de chaleur, le moyen susceptible de contenir un gaz inerte subit une variation brusque et importante de température, par exemple de l'ordre de 1300°C (température de la paroi qui peut être atteinte après contact avec les fumées chaudes), mais il n'y a pas de risques de corrosion ou d'oxydation de sa paroi car il n'y a pas de contact direct entre le gaz de combustion (qui peut être l'oxygène ou contenir de l'oxygène) et la paroi dudit moyen susceptible de contenir le gaz inerte. Au contraire, le moyen pour transporter le gaz de combustion est plus sensible aux variations brusques de température car elles accélèrent la corrosion et l'oxydation ; par contre, il subit une variation de température moins rapide car le transfert thermique s'effectue à travers le gaz inerte qui fonctionne comme un tampon.

Par ailleurs, pendant le fonctionnement d'un échangeur de chaleur, la température des fumées chaudes peut varier de manière ponctuelle. Dans un échangeur de chaleur de l'art antérieur, cela entraîne des variations de température du gaz de combustion qui est chauffé, variations qui doivent être prises en compte dans la régulation de la combustion. Dans le cas d'un échangeur de chaleur selon l'invention, l'inertie thermique du gaz inerte diminue l'ampleur de ces variations.

De plus, la présence de ladite zone de gaz inerte a des conséquences avantageuses en terme de sécurité. En effet, en cas de perforation de paroi ou d'inflammation du moyen pour transporter le gaz de combustion, le mélange du gaz de combustion avec les fumées chaudes est empêché du fait du gaz inerte. De plus, le gaz inerte peut être absorbé par effet Venturi dans ledit moyen pour transporter le gaz de combustion, et la diminution de la pureté du gaz de combustion souvent oxydant permet de réduire la probabilité de propagation de la combustion.

Dans un mode de réalisation, l'échangeur de chaleur selon l'invention est équipé d'un moyen de contrôle du fonctionnement de l'échangeur de chaleur, qui permet de détecter des défaillances.

En particulier, le moyen susceptible de contenir un gaz inerte peut être relié à un détecteur de variation de pression. Si le détecteur de variation de pression détecte une baisse de pression, cela est identifié comme une fuite de gaz inerte due à une perforation d'une paroi. Une alarme de prévention peut alors être déclenchée et un système de déviation peut être prévu pour continuer l'alimentation du brûleur en gaz de combustion tout en arrêtant le passage des fumées chaudes dans l'échangeur de chaleur détérioré qui peut être réparé.

Le moyen susceptible de contenir un gaz inerte peut également être relié à un moyen de contrôle du fonctionnement de l'échangeur de chaleur qui mesure à tout moment la température et la pression du gaz inerte. Cette double détection permet d'affiner le contrôle. En effet, la température du gaz inerte varie énormément lors la mise en service (par exemple de l'ordre de 30°C à environ 1000°C), sauf s'il est préalablement chauffé, et cette variation de température entraîne une variation de pression à volume constant. Dans un système qui ne contrôle que la pression, la variation de pression lors de la mise en service va générer des alarmes faux-positives. Au contraire, dans un système contrôlant la température et la pression, le contrôle peut être plus précis et il peut être prévu une alarme, c'est-à-dire le signe d'une fuite de gaz inerte, dans les cas suivants : (1) la pression mesurée décroît et la température mesurée reste constante, ou (2) la pression mesurée décroît et la température mesurée augmente. Un système de dérivation peut être prévu pour continuer l'alimentation du brûleur en gaz de combustion tout en arrêtant le passage des fumées chaudes dans l'échangeur de chaleur détérioré qui peut être réparé.

La baisse de pression, détectée par un détecteur de pression ou un détecteur de pression et de température, peut révéler une fuite de gaz inerte due à une perforation de la paroi du moyen pour transporter un gaz de combustion et/ou de la paroi du moyen susceptible de contenir un gaz inerte, même si ces parois ne sont pas soumises aux même contraintes.

Dans le cas d'un échangeur de chaleur comprenant un moyen de contrôle du fonctionnement de l'échangeur de chaleur, il est préférable qu'il existe une différence de pression ΔP entre la pression statique du gaz de combustion P_{GC} statique et la pression statique du gaz inerte P_{GI} statique, cette différence de pression pouvant être positive ou négative. De préférence, la différence de pression sera positive, c'est-à-dire que la pression statique du gaz inerte sera supérieure à la pression statique du gaz de combustion. Une différence de pression supérieure au bruit de fond de l'appareil, c'est-à-dire aux variations normales, sera préférée de façon à limiter les alarmes faux-positives. L'homme de l'art pourra établir au cas par cas le bruit d'un dispositif, après la mesure de la variation de pression du dispositif.

D'une manière générale, et qu'il y ait ou non une différence de pression ΔP, le transfert thermique entre les fumées chaudes et le gaz de combustion via le gaz inerte est aussi fonction de la pression du gaz inerte, car à haute pression la masse volumique du gaz inerte augmente et donc le taux de transfert thermique augmente, l'échangeur de chaleur est donc a priori plus efficace.

Par ailleurs, une différence de pression positive, c'est-à-dire P_{GI statique} > P_{GC} statique, favorise la fuite de gaz inerte dans le moyen pour transporter un gaz de combustion, et favorise donc l'effet Venturi, en cas de perforation de paroi ou d'inflammation du moyen pour transporter le gaz de combustion, et favorise en particulier l'arrêt de l'inflammation du fait du flux de gaz inerte. D'une manière générale, il est aisé pour l'homme du métier de déterminer la pression de gaz inerte appropriée : connaissant le débit d'entrée et le diamètre du moyen pour transporter le gaz de combustion, on peut en déduire la pression statique, et par conséquent fixer la pression de gaz inerte souhaitée pour obtenir ou non une différence de pression, positive ou non. A titre indicatif, on peut dimensionner l'échangeur, et plus spécifiquement la pression de gaz inerte, de façon à ce qu'en cas de début de combustion (lors d'une fuite), le débit de gaz inerte aspiré par effet Venturi dans le moyen pour transporter un gaz de combustion soit supérieur, de préférence environ deux fois supérieur, de préférence encore en viron quatre fois supérieur, au débit du gaz de combustion. Lorsque le gaz de combustion est l'oxygène, et le débit du gaz inerte est environ quatre fois supérieur à celui de l'oxygène, le pourcentage d'oxygène dans le mélange formé suite à l'aspiration par effet Venturi est alors équivalent au pourcentage d'oxygène dans l'air. Ce calcul peut se faire sur la base d'une estimation de la taille de la perforation dans le moyen susceptible de contenir le gaz de combustion. En outre, étant donné que le débit de gaz de combustion peut être variable, le calcul est préférentiellement réalisé sur la base du débit maximal (et donc de la pression correspondante) de gaz combustion pouvant être appliqué dans l'échangeur. Si la taille de la perforation dans le moyen susceptible de contenir le gaz de combustion est inférieure à la taille prévue pour le calcul du dimensionnement, et par conséquent la pression de gaz inerte appliquée ne permet pas d'arrêter la combustion du matériau, la présence d'un détecteur de variation de pression du gaz inerte permet d'arrêter l'alimentation en gaz de combustion et d'assurer rapidement la combustion du matériau.

L'invention a également pour objet un four à combustion comprenant au moins un échangeur de chaleur selon l'invention. De préférence, il comprendra plusieurs échangeurs de chaleur selon l'invention, l'un ou plusieurs pouvant alimenter le four en combustible et/ou l'un ou plusieurs pouvant alimenter le four en comburant.

L'invention a également pour objet un procédé d'échange de chaleur pour préchauffer un gaz de combustion alimentant un four à combustion émettant des fumées chaudes, ledit procédé comprenant une étape de préchauffage du gaz de combustion par échange thermique avec les fumées chaudes, par l'intermédiaire d'une atmosphère de gaz inerte. Le procédé selon l'invention peut comprendre la mise en oeuvre d'un échangeur de chaleur selon l'invention.

L'échangeur de chaleur indirect selon l'invention sera décrit plus en détail en liaison avec les figures, qui sont données à titre illustratif uniquement, et dans lesquelles :
La figure 1 représente un mode de réalisation d'un échangeur de chaleur indirect selon l'invention,
La figure 2 illustre les pressions de gaz inerte et de gaz de combustion dans un échangeur de chaleur selon l'invention,
La figure 3 représente un échangeur de chaleur indirect selon l'invention au sein d'un système d'alimentation d'un four à combustion,
La figure 4 illustre un type particulier d'échangeur de chaleur selon l'invention.

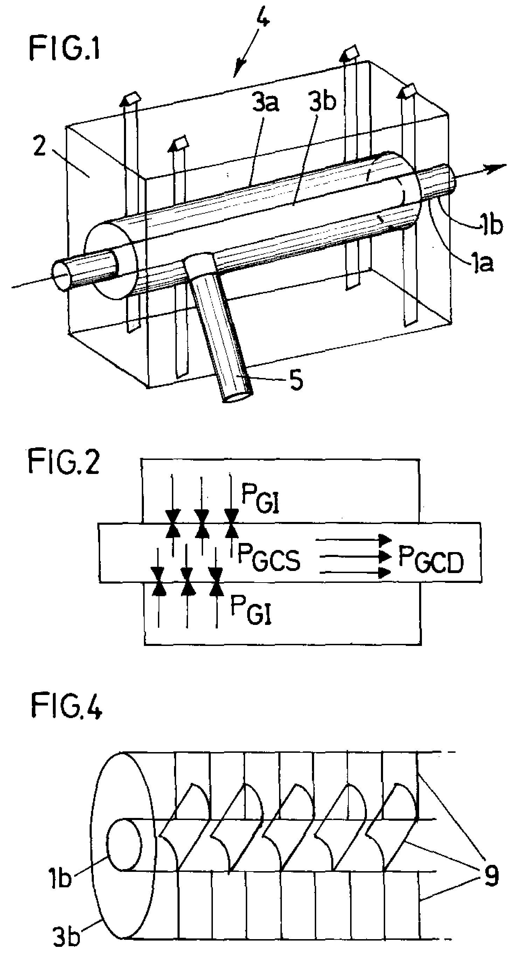

La figure 1 représente un échangeur de chaleur indirect (4) selon l'invention comprenant une zone d'échange de chaleur (2), traversée par des fumées chaudes, et comprenant un moyen (1a) pour transporter un gaz de combustion dans le sens indiqué par les flèches, ledit moyen étant muni d'une paroi (1b), disposé dans un moyen (3a) susceptible de contenir un gaz inerte pourvu d'une paroi (3b). Dans ce mode de réalisation, le moyen (1a) pour transporter un gaz de combustion est disposé dans le moyen (3a) susceptible de contenir un gaz inerte dans la zone d'échange de chaleur (2) et dans les zones précédant et suivant cette zone d'échange de chaleur dans le sens de transport du gaz de combustion dans le moyen pour transporter le gaz de combustion.

Le moyen de contrôle du fonctionnement de l'échangeur de chaleur (5), qui est optionnel, est ici représenté relié au moyen susceptible de contenir un gaz inerte. Les flèches larges verticales indiquent le sens de traversée des fumées chaudes, de part et d'autre des moyens (1a) et (3a), qui dans ce mode de réalisation est perpendiculaire à la direction du gaz de combustion.

La figure 2 illustre les pressions de gaz inerte P_{GI} et de gaz de combustion P_{GC}, statique P_{GC S} ou dynamique P_{GC D}, dans un échangeur de chaleur selon l'invention. Il est préféré que P_{GI} statique soit supérieure à P_{GC} statique, de façon à créer une différence de pression ΔP = P_{GI statique} - P_{GC} statique positive.

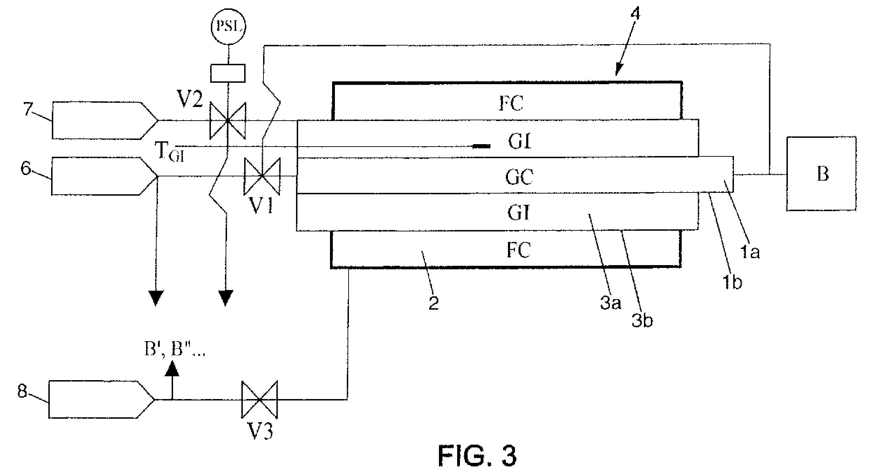

La figure 3 représente le schéma de l'ensemble d'un dispositif d'alimentation d'un four à combustion et plus spécifiquement d'un brûleur (B) dudit four. Le dispositif comprend un échangeur de chaleur selon l'invention. L'échangeur de chaleur est relié à une source de gaz de combustion (6), à une source de gaz inerte (7) et à une source de fumées chaudes (8). L'échangeur de chaleur comprend une zone d'échange de chaleur (2), traversée par des fumées chaudes (sens de traversée non représenté). Il comprend également un moyen (1a) de transport d'un gaz de combustion GC muni d'une paroi (1b), alimentant un brûleur (B), ledit moyen (1a) étant disposé dans un moyen (3a) susceptible de contenir un gaz inerte GI pourvu d'une paroi (3b). Dans ce mode de réalisation, le moyen (1a) pour transporter un gaz de combustion GC est disposé dans le moyen (3a) susceptible de contenir un gaz inerte GI dans la zone d'échange de chaleur (2) et dans les zones précédant et suivant cette zone d'échange de chaleur dans le sens de transport du gaz de combustion dans le moyen pour transporter le gaz de combustion. Trois vannes V1, V2 et V3 sont présentes pour contrôler les alimentations en gaz de combustion (vanne V1), gaz inerte (vanne V2) et fumées chaudes (vanne V3), respectivement. L'échangeur de chaleur représenté comprend un moyen de contrôle du fonctionnement de l'échangeur de chaleur relié au moyen susceptible de contenir un gaz inerte, ainsi qu'aux vannes. Ce moyen de contrôle du fonctionnement de l'échangeur de chaleur comprend un détecteur de température T_{GI} et un détecteur de pression PSL qui permet la mesure de la température et de la pression de gaz inerte.

Une perforation est détectée par le moyen de contrôle du fonctionnement de l'échangeur de chaleur si le détecteur T_{GI} mesure une baisse de pression et une température constante, ou si le détecteur T_{GI} mesure une baisse de pression et une augmentation de température. La vanne V1 est modifiée pour que le gaz de combustion évite l'échangeur de chaleur endommagé grâce à une dérivation, la vanne V3 est modifiée pour arrêter le passage des fumées dans l'échangeur endommagé, une alarme de prévention est déclenchée, et il est possible de remplacer les composants endommagés. Les sources de gaz de combustion (6), gaz inerte (7) et fumées chaudes (8) peuvent alors éventuellement alimenter ou continuer d'alimenter d'autres brûleurs B', B", etc.

La figure 4 représente le schéma d'un échangeur de chaleur selon l'invention constitué de deux tubes droits de section droite dont les parois (1 b) et (3b) sont reliées entre elles par des ponts métalliques (9) s'étendant de la paroi interne du tube extérieur à la paroi extérieure du tube intérieur.

## Revendications

1. Procédé d'échange de chaleur pour préchauffer un gaz de combustion alimentant un four à combustion émettant des fumées chaudes, ledit procédé comprenant une étape de préchauffage du gaz de combustion par échange thermique avec les fumées chaudes, par l'intermédiaire d'une atmosphère de gaz inerte, ledit procédé comprenant la mise en oeuvre d'un échangeur de chaleur comprenant une zone d'échange de chaleur (2) pourvue d'un moyen de traversée des fumées chaudes issues d'un brûleur du four, ladite zone étant traversée par au moins un moyen (1a) pour transporter un gaz de combustion à chauffer depuis une source de gaz de combustion, via la zone d'échange de chaleur et jusqu'à un brûleur du four, ledit moyen (1a) étant pourvu d'une paroi (1b) conçue pour permettre le chauffage du gaz de combustion par transfert d'énergie thermique, ledit moyen (1a) pour transporter le gaz de combustion étant disposé dans la zone d'échange de chaleur dans un moyen (3a) contenant le gaz inerte et pourvu d'une paroi (3b) conçue pour permettre le chauffage du gaz inerte par transfert de l'énergie thermique desdites fumées chaudes, de manière à ce que dans l'échangeur de chaleur (2), l'échange thermique entre les fumées chaudes et le gaz de combustion se fait de façon indirecte à travers la paroi (1b) du moyen (1a) pour transporter le gaz de combustion et à travers une atmosphère du gaz inerte.

2. Procédé selon la revendication 1 **caractérisé en ce que** le gaz inerte est statique.

3. Procédé selon la revendication 1 ou 2, **caractérisé en ce que** le moyen (1a) pour transporter un gaz de combustion est un tube ou un conduit, en particulier de section droite parfaitement ou sensiblement circulaire.

4. Procédé selon l'une quelconque des revendications 1 à 3, **caractérisé en ce que** le moyen (3a) contenant le gaz inerte est un tube ou un conduit, en particulier de section droite parfaitement ou sensiblement circulaire.

5. Procédé l'une quelconque des revendications 1 à 4, **caractérisé en ce que** le moyen (1a) pour transporter un gaz de combustion est disposé dans le moyen (3a) contenant le gaz inerte dans la zone d'échange de chaleur (2) et dans une ou plusieurs zones précédant et/ou suivant cette zone d'échange de chaleur dans le sens de transport du gaz de combustion dans le moyen pour transporter le gaz de combustion.

6. Procédé selon l'une quelconque des revendications 1 à 5, **caractérisé en ce que** l'échangeur de chaleur comprend plusieurs moyens (1a) pour transporter un gaz de combustion.

7. Procédé selon la revendication 6, **caractérisé en ce que** l'échangeur de chaleur comprend plusieurs moyens (3a) contenant le gaz inerte, et **en ce que** chacun des moyens (1a) pour transporter le gaz de combustion est disposé dans un des moyens (3a) contenant le gaz inerte, lesdits moyens contenant le gaz inerte étant optionnellement reliés entre eux par des conduits dans la zone d'échange de chaleur.

8. Procédé selon l'une quelconque des revendications 1 à 7, **caractérisé en ce que** le fonctionnement de l'échangeur de chaleur est contrôlé par un moyen de contrôle, notamment un moyen de contrôle du fonctionnement de l'échangeur de chaleur relié au moyen contenant gaz inerte.

9. Procédé selon la revendication 8, **caractérisé en ce que** le moyen de contrôle du fonctionnement de l'échangeur de chaleur détecte les variations de pression ou les variations de pression et de température.

10. Procédé selon l'une quelconque des revendications 1 à 9, **caractérisé en ce qu'**il présente une différence de pression, en particulier positive, entre la pression statique du gaz de combustion et la pression statique du gaz inerte.

11. Four à combustion comprenant au moins un brûleur et au moins un échangeur de chaleur comprenant une zone d'échange de chaleur (2) pourvue d'un moyen de traversée de fumées chaudes issues d'un brûleur du four, ladite zone étant traversée par au moins un moyen (1a) pour transporter un gaz de combustion à chauffer depuis une source de gaz de combustion, via la zone d'échange de chaleur et jusqu'à un brûleur du four, ledit moyen (1a) étant pourvu d'une paroi (1b) conçue pour permettre le chauffage du gaz de combustion par transfert d'énergie thermique, ledit moyen (1 a) pour transporter le gaz de combustion étant disposé dans la zone d'échange de chaleur dans un moyen (3a) susceptible de contenir un gaz inerte et pourvu d'une paroi (3b) conçue pour permettre le chauffage du gaz inerte par transfert de l'énergie thermique desdites fumées chaudes, de manière à ce que dans l'échangeur de chaleur, l'échange thermique entre les fumées chaudes et le gaz de combustion se fait de façon indirecte à travers la paroi (1b) du moyen (1a) pour transporter le gaz de combustion et à travers une atmosphère du gaz inerte.

12. Four selon la revendication 11, **caractérisé en ce que** l'échangeur de chaleur comprend plusieurs moyens (1 a) pour transporter un gaz de combustion.

13. Four selon la revendication 12, **caractérisé en ce que** l'échangeur de chaleur comprend plusieurs moyens (3a) susceptibles de contenir un gaz inerte, et **en ce que** chacun des moyens (1a) pour transporter un gaz de combustion est disposé dans un des moyens (3a) susceptibles de contenir un gaz inerte, lesdits moyens susceptibles de contenir un gaz inerte étant optionnellement reliés entre eux par des conduits dans la zone d'échange de chaleur.

14. Four selon l'une quelconque des revendications 12 à 13 **caractérisé en ce que** l'échangeur de chaleur comprend un moyen de contrôle du fonctionnement de l'échangeur de chaleur (5), notamment un moyen de contrôle du fonctionnement de l'échangeur de chaleur relié au moyen susceptible de contenir un gaz inerte.

## Patentansprüche

1. Wärmetauschverfahren zum Vorheizen eines Verbrennungsgases, das einen Verbrennungsofen speist, der heiße Abgase abgibt, wobei das besagte Verfahren einen Schritt zum Vorheizen des Verbrennungsgases durch einen Wärmeaustausch mit den heißen Abgasen durch eine Inertgasatmosphäre umfasst, wobei das besagte Verfahren die Anwendung eines Wärmetauschers umfasst, der eine Wärmetauschzone (2) umfasst, die mit einem Mittel zum Durchströmen der heißen Abgase aus einem Brenner des Ofens versehen ist, wobei die besagte Zone von zumindest einem Mittel (1a) zum Befördern eines zu erhitzenden Verbrennungsgases von einer Verbrennungsgasquelle über die Wärmetauschzone und bis zum Brenner des Ofens durchquert wird, wobei das besagte Mittel (1a) mit einer Wand (1b) versehen ist, die gestaltet ist, um die Erhitzung des Verbrennungsgases durch Übertragung thermischer Energie zu ermöglichen, wobei das besagte Mittel (1a) zum Befördern des Verbrennungsgases in der Wärmetauschzone in einem Mittel (3a) angeordnet ist, welches das Inertgas enthält, und mit einer Wand (3b) versehen ist, die gestaltet ist, um die Erhitzung des Inertgases durch Übertragung thermischer Energie der besagten heißen Abgase zu ermöglichen, sodass der Wärmeaustausch zwischen den heißen Abgasen und dem Verbrennungsgas im Wärmetauscher (2) in indirekter Form durch die Wand (1b) des Mittels (1a) zum Befördern des Verbrennungsgases und durch eine Inertgasatmosphäre erfolgt.

2. Verfahren nach Anspruch 1, **dadurch gekennzeichnet, dass** das Inertgas statisch ist.

3. Verfahren nach Anspruch 1 oder 2, **dadurch gekennzeichnet, dass** das Mittel (1a) zum Befördern des Verbrennungsgases ein Rohr oder ein Kanal, im Speziellen mit einem vollkommen oder in etwa kreisrunden geraden Querschnitt ist.

4. Verfahren nach irgendeinem der Ansprüche 1 bis 3, **dadurch gekennzeichnet, dass** das Mittel (3a), welches das Inertgas umfasst, ein Rohr oder ein Kanal, im Speziellen mit einem vollkommen oder in etwa kreisrunden geraden Querschnitt ist.

5. Verfahren nach irgendeinem der Ansprüche 1 bis 4, **dadurch gekennzeichnet, dass** das Mittel (1a) zum Befördern eines Verbrennungsgases im Mittel (3a) angeordnet ist, welches das Inertgas in der Wärmetauschzone (2) umfasst, und in einer oder mehreren Zonen vor und/ oder nach dieser Wärmetauschzone in Beförderungsrichtung des Verbrennungsgases im Mittel zum Befördern des Verbrennungsgases.

6. Verfahren nach irgendeinem der Ansprüche 1 bis 5, **dadurch gekennzeichnet, dass** der Wärmetauscher mehrere Mittel (1a) zum Befördern eines Verbrennungsgases umfasst.

7. Verfahren nach Anspruch 6, **dadurch gekennzeichnet, dass** der Wärmetauscher mehrere Mittel (3a) umfasst, welche das Inertgas umfassen, und dadurch, dass jedes der Mittel (1a) zum Befördern des Verbrennungsgases in einem der Mittel (3a) angeordnet ist, welches das Inertgas umfasst, wobei die besagten Mittel, die das Inertgas enthalten, optional durch Kanäle in der Wärmetauschzone miteinander verbunden sind.

8. Verfahren nach irgendeinem der Ansprüche 1 bis 7, **dadurch gekennzeichnet, dass** der Betrieb des Wärmetauschers durch ein Steuermittel, vor allem ein Mittel zum Steuern des Wärmetauschers gesteuert wird, das mit dem Mittel verbunden ist, welches das Inertgas enthält.

9. Verfahren nach Anspruch 8, **dadurch gekennzeichnet, dass** das Mittel zum Steuern des Betriebs des Wärmetauschers Druckvariationen, oder Druck- und Temperaturvariationen erkennt.

10. Verfahren nach irgendeinem der Ansprüche 1 bis 9, **dadurch gekennzeichnet, dass** es einen, im Besonderen positiven Druckunterschied zwischen dem statischen Druck des Verbrennungsgases und dem statischen Druck des Inertgases aufweist.

11. Verbrennungsofen, zumindest einen Brenner und zumindest einen Wärmetauscher umfassend, der eine Wärmetauschzone (2) umfasst, die mit einem Mittel zum Durchströmen heißer Abgase aus einem Brenner des Ofens versehen ist, wobei die besagte Zone von zumindest einem Mittel (1a) zum Befördern eines zu erhitzenden Verbrennungsgases von einer Verbrennungsgasquelle über die Wärmetauschzone und bis zum Brenner des Ofens durchquert wird, wobei das besagte Mittel (1a) mit einer Wand (1b) versehen ist, die gestaltet ist, um die Erhitzung des Verbrennungsgases durch Übertragung thermischer Energie zu ermöglichen, wobei das besagte Mittel (1a) zum Befördern des Verbrennungsgases in der Wärmetauschzone in einem Mittel (3a) angeordnet ist, welches das Inertgas enthalten kann, und mit einer Wand (3b) versehen ist, die gestaltet ist, um die Erhitzung des Inertgases durch Übertragung thermischer Energie der besagten heißen Abgase zu ermöglichen, sodass der Wärmeaustausch zwischen den heißen Abgasen und dem Verbrennungsgas im Wärmetauscher in indirekter Form durch die Wand (1b) des Mittels (1a) zum Befördern des Verbrennungsgases und durch eine Inertgasatmosphäre erfolgt.

12. Ofen nach Anspruch 11, **dadurch gekennzeichnet, dass** der Wärmetauscher mehrere Mittel (1a) zum Befördern eines Verbrennungsgases umfasst.

13. Ofen nach Anspruch 12, **dadurch gekennzeichnet, dass** der Wärmetauscher mehrere Mittel (3a) umfasst, welche das Inertgas umfassen können, und dadurch, dass jedes der Mittel (1a) zum Befördern des Verbrennungsgases in einem der Mittel (3a) angeordnet ist, welches ein Inertgas umfassen kann, wobei die besagten Mittel, die das Inertgas enthalten können, optional durch Kanäle in der Wärmetauschzone miteinander verbunden sind.

14. Ofen nach irgendeinem der Ansprüche 12 bis 13, **dadurch gekennzeichnet, dass** der Wärmetauscher ein Mittel zum Steuern des Betriebs des Wärmetauschers (5), vor allem ein Mittel zum Steuern des Betriebs des Wärmetauschers umfasst, der mit dem Mittel verbunden ist, das ein Inertgas enthalten kann.

## Claims

1. Heat exchange method for preheating a combustion gas fed to a combustion furnace emitting hot flue gases, said method comprising a step for preheating the combustion gas by heat exchange with the hot flue gases, via an inert gas atmosphere, said method comprising the use of a heat exchanger comprising a heat exchange zone (2) provided with a means for the passage of hot flue gases issuing from a burner of the furnace, said zone being traversed by at least one means (1a) for transporting a combustion gas to be heated from a combustion gas source, via the heat exchange zone and up to a burner of the furnace, said means (1a) being provided with a wall (1b) designed to enable the combustion gas to be heated by heat transfer, said means (1a) for transporting the combustion gas being placed in the heat exchange zone in a means (3a) containing the inert gas and provided with a wall (3b) designed to enable the inert gas to be heated by heat transfer from said hot flue gases, such that in the heat exchanger (2), the heat exchange between the hot flue gases and the combustion gas takes place in an indirect manner through the wall (1b) of the means (1a) for transporting the combustion gas and through an inert gas atmosphere.

2. Method according to claim 1, **characterised in that** the inert gas is static.

3. Method according to claim 1 or 2, **characterised in that** the means (1a) for transporting a combustion gas is a tube or duct, in particular having a perfectly or substantially circular cross-section.

4. Method according to any one of claims 1 to 3, **characterised in that** the means (3a) containing the inert gas is a tube or duct, in particular having a perfectly or substantially circular cross-section.

5. Method according to any one of claims 1 to 4, **characterised in that** the means (1a) for transporting a combustion gas is placed in the means (3a) containing the inert gas in the heat exchange zone (2) and in one or more zones preceding and/or following said heat exchange zone in the combustion gas transport direction in the means for transporting the combustion gas.

6. Method according to any one of claims 1 to 5, **characterised in that** the heat exchanger comprises several means (1a) for transporting a combustion gas.

7. Method according to claim 6, **characterised in that** the heat exchanger comprises several means (3a) containing the inert gas, and **in that** each of the means (1a) for transporting the combustion gas is placed in one of the means (3a) containing the inert gas, said means containing the inert gas being optionally connected together by ducts in the heat exchange zone.

8. Method according to any one of claims 1 to 7, **characterised in that** the operation of the heat exchanger is controlled by a control means, particularly a means for controlling the operation of the heat exchanger connected to the means containing the inert gas.

9. Method according to claim 8, **characterised in that** the means for controlling the operation of the heat exchanger detects variations in pressure or variations in pressure and temperature.

10. Method according to any one of claims 1 to 9, **characterised in that** it has a pressure difference, in particular positive, between the static pressure of the combustion gas and the static pressure of the inert gas.

11. Combustion furnace comprising at least one burner and at least one heat exchanger comprising a heat exchange zone (2) provided with a means for the passage of hot flue gases issuing from a burner of the furnace, said zone being traversed by at least one means (1a) for transporting a combustion gas to be heated from a combustion gas source, via the heat exchange zone and up to a burner of the furnace, said means (1a) being provided with a wall (1b) designed to enable the combustion gas to be heated by heat transfer, said means (1a) for transporting the combustion gas being placed in the heat exchange zone in a means (3a) capable of containing an inert gas and provided with a wall (3b) designed to enable the inert gas to be heated by heat transfer from said hot flue gases, such that in the heat exchanger, the heat exchange between the hot flue gases and the combustion gas takes place in an indirect manner through the wall (1b) of the means (1a) for transporting the combustion gas and through an inert gas atmosphere.

12. Furnace according to claim 11, **characterised in that** the heat exchanger comprises several means (1a) for transporting a combustion gas.

13. Furnace according to claim 12, **characterised in that** the heat exchanger comprises several means (3a) capable of containing an inert gas, and **in that** each of the means (1a) for transporting a combustion gas is placed in one of the means (3a) capable of containing an inert gas, said means capable of containing an inert gas being optionally connected together by ducts in the heat exchange zone.

14. Furnace according to any one of claims 12 to 13, **characterised in that** the heat exchanger comprises a means for controlling the operation of the heat exchanger (5), particularly a means for controlling the operation of the heat exchanger connected to the means capable of containing an inert gas.
